# EUROPÄISCHE PATENTSCHRIFT

(11) **EP 0 581 926 B1**
(45) Veröffentlichungstag und Bekanntmachung des Hinweises auf die Patenterteilung: **11.09.1996**
(21) Anmeldenummer: 93903700.8
(22) Anmeldetag: 16.02.1993
(51) Int. Cl.: A23K 1/16, A61K 31/47

(54) **TIERFUTTER ZUR LEISTUNGSSTEIGERUNG**
ANIMAL FEEDSTUFF FOR GROWTH INCREASE
NOURRITURE POUR ANIMAUX AMELIORANT LEUR CROISSANCE

(30) Priorität: 21.02.1992 AT 338/92
(43) Veröffentlichungstag der Anmeldung: 09.02.1994
(73) Patentinhaber: NEUFELD, Klaus, A-2532 Heiligenkreuz (AT)
(72) Erfinder: NEUFELD, Klaus, A-2532 Heiligenkreuz (AT)
(74) Vertreter: Puchberger, Peter, Dipl.-Ing.
(86) Internationale Anmeldenummer: AT9300021
(87) Internationale Veröffentlichungsnummer: WO9316602

(56) Entgegenhaltungen:
- EP-A- 0 025 649
- GB-A- 2 078 109
- P.H.LIST & L.HÖRHAMMER 'HAGERS HANDBUCH DER PHARMAZEUTISCHEN PRAXIS' 1979 , SPRINGER-VERLAG , BERLIN,DE VI. BAND, TEIL B
- JOURNAL OF TOXICOLOGY AND ENVIRONMENTAL HEALTH Bd. 20, Nr. 1-2, 1987, US Seiten 199 - 208 PETER J. BECCI ET AL. 'Short-term toxicity studies of sanguinarine and two alkaloid extracts of SANGUINARIA CANADENSIS L."
- JOURNAL OF CLINICAL DENTISTRY Bd. 1, Nr. 3, 1989, US Seiten 59 - 66 KIT A. KELLER ET AL. 'Reproductive and developmental toxicological evaluation of sanguinaria extract'

## Beschreibung

Die Erfindung betrifft ein Tierfutter für Nutztiere und ein Verfahren zur Leistungsförderung bei Nutztieren.

Sogenannte Leistungsförderer werden in der heutigen Nutztierfütterung üblicherweise angewendet. Man unterscheidet antibiotische und chemische Leistungsförderer wie etwa Zink-Bacitracin, Flavophospholipol, Virginiamycin, Tylosin-Phosphat, Avoparcin, Olaquindox und Monensin-Natrium, welche in Österreich als leistungsfördernde Futterzusatzstoffe zugelassen sind. Weiters gibt es seit einigen Jahren sogenannte Probiotica oder mikrobiologische Leistungsförderer.

Der Zweck dieser antibiotischen, chemischen und mikrobiologischen Leistungsförderer ist es, die Wachstumsintensität der Nutztiere zu erhöhen.

Chemische und antibiotische Leistungsförderer sind allerdings in den letzten Jahren, vor allem beim Konsumenten, in Verruf geraten und wurden etwa in Schweden als Futterzusatzstoffe verboten. Dies nicht so sehr wegen einer möglichen Rückstandproblematik im Lebensmittel oder einer möglichen Gefährdung des Konsumenten, welche vielleicht durch früher zugelassene, in der Zwischenzeit jedoch verbotene Substanzen bestanden hat, sondern vielmehr durch den Wunsch des Konsumenten nach einem natürlichen, unverfälschten und gesundheitlich unbedenklichen Lebensmittel.

Die Entwicklung der mikrobiologischen Leistungsförderer hat diesem Wunsch teilweise Rechnung getragen, jedoch erfüllen diese nicht ganz die Erwartungen der modernen Landwirtschaft, die zu einem ökonomischen Produktionsprozeß gezwungen ist.

Das erfindungsgemäße Tierfutter ist dadurch gekennzeichnet, daß es neben üblichen Futterinhaltsstoffen eine wirksame Menge Pflanzenmaterial der Sanguinaria Canadensis oder eines Extraktes daraus, oder eine wirksame Menge Benzophenanthiridin-Alkaloid, insbesondere Sanguinarin-Alkaloid, und dessen Derivate enthält. Weitere vorteilhafte Merkmale sind den Patentansprüchen und der nachfolgenden Beschreibung zu entnehmen.

Mit der vorliegenden Erfindung wird unter anderem ein Tierfutter oder Ergänzungsfutter für Tiere geschaffen, welches Alkaloide insbesondere der Pflanze Sanguinaria Canadensis, wie etwa Sanguinarin, Chelerythrin, Chelirubin, Sanguirubin, Chelilutin, Sanguilutin, aber auch Derivate dieser, wie etwa Sanguinarin-chlorid oder die gesamte alkaloidhaltige Pflanze oder Teile dieser enthält. Diese haben eine wachstumsfördernde Wirkung bei Nutztieren. Weiters bewirkt das Futtermittel durch seine Inhaltsstoffe eine bessere Resistenz von Nutztieren, insbesondere von Geflügel, gegen Salmonellen, welche vor allem in der Geflügelzucht heute einen enormen finanziellen Schadfaktor über die Tiergesundheit darstellen. Ebenso tritt diese Schutzwirkung gegen einzellige Krankheitserreger, insbesondere Coccidien, welche bei unseren Nutztieren, insbesondere wieder beim Geflügel, eine bedeutende Beeinträchtigung der Tiergesundheit verursachen, ein. Eine weitere Schutzwirkung tritt gegen einen bakteriellen Erreger (Escherichia coli), vor allem beim Schwein durch die Verabreichung des erfindungsgemäßen Futters oder dessen Inhaltsstoffe ein. Ein weiterer Vorteil des erfindungsgemäßen Futters und der beigemengten Substanz ist die bessere Haltbarkeit des Futtermittels durch eine erhöhte Resistenz gegen mycotischen (durch Pilze bedingten) und bakteriellen Futtermittelverderb. Überdies liegt ein wachstumsfördernder Futterzusatzstoff auf rein pflanzlicher und natürlicher Basis vor, der auch den Wünschen des Konsumenten nach einem naturbelassenen Lebensmittel enspricht.

Sanguinarin und verwandte Alkaloide kommen vor allem in der Sanguinaria Canadensis Pflanze, aber auch in anderen Pflanzen vor. Sanguinarin und verwandte Alkaloide besitzen eine breite in vitro Aktivität gegen gram-positive und gram-negative Erreger ebenso wie gegen Protozoen und Pilze. Es hat sich aufgrund von Toxizitätsstudien und der Tatsache, daß die Substanz nur in Spuren aus dem Darmtrakt resorbiert wird erwiesen, daß sich diese Substanzen besonders gut als Futtermittelzusatz für Tiere eignen. Mittels Ames Salmonella/Micro-somen Test konnte nachgewiesen werden, daß keine Mutagenität vorliegt. In Fütterungsversuchen an Tieren konnte keine toxische Wirkung mit Konzentrationen von 15, 45 und 150 ppm Sanguinarin nachgewiesen werden. Die LD 50 bei oraler Applikation wurde bei Tieren bei verschiedenen Sanguinaria Extrakten mit zwischen 1250 und 1658 mg/kg festgestellt, also einem Wert, der bis zu 1500 mal höher ist als der des Futterzusatzes.

Extrakte aus der Sanguinaria Canadensis enthalten die Hauptalkaloide z.B. in folgender Konzentration, bezogen auf den Gesamtalkaloidgehalt

**Tabelle 1**

| Extrakt | A | B |
|---|---|---|
| Sanguinarin | 50% | 40% |
| Chelerythrin | 25% | 24% |
| Chelirubin | 4% | 3,5% |
| Sanguirubin | 1% | 0,5% |
| Chelilutin | 5% | 32% |
| Sanguilutin | 15% | verbunden mit Chelerythrin |

Der Hauptbestandteil Sanguinarin hat folgende Strukturformel (in Form des Chlorids):

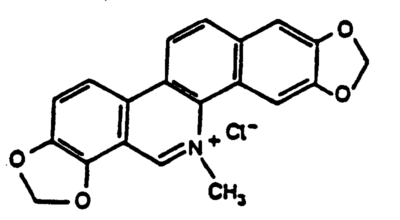

Es handelt sich dabei chemisch um ein Benzophenanthridinchlorid.

### Beispiel für Futtermittel:

Wachstumsförderndes Futtermittel für Mastschweine auf Basis eines Schweinemastfutters II nach der österreichischen Futtermittelverordnung:

| | |
|---|---|
| Rohprotein mindestens % | 13 |
| Verdauliches Eiweiß mind.% | 10 |
| Umsetzbare Energie mind. MJ/kg | 12 |
| Gesamtnährstoff mind. g/kg | 680 |
| Rohfaser höchstens % | 8 |
| Calcium mind. % | 0,6 |
| Phosphor mind. % | 0,5 |
| Natrium mind. % | 0,15 |
| Lysin mind. % | 0,55 |
| Vitamin A I.E./kg | 4.000-20.000 |
| Vitamin D I.E./kg | 450- 3.000 |
| Kupfer mind. mg/kg | 20 |
| Zink mind. mg/kg | 70 |

### Zusammensetzung

Rationsbeispiel für das Schweinemastfutter II gemäß Erfindung
(Angaben in Gewichtsprozent)
- 80%: Gerste
- 9,2%: Mais
- 5%: Soja
- 2,6%: Tiermehl
- 0,8%: Futterkalk
- 1,5%: DCP
- 0,4%: Viehsalz
- 0,5%: Vitamin u. Mineralstoffprämix
- 50 mg/kg: Sanguinariaextrakt

Der Sanguinariaextrakt kann in Mengen zwischenl und 500 mg/kg Futtermittel eingesetzt werden, bevorzugt zwischen 5 und 150 mg/kg.

Sämtliche andere bedarfsgerechte Tierfutter können mit der gleichen Konzentration (1-500 mg/kg Futter) des Sanguinariaextraktes oder der entsprechenden Derivate hergestellt werden.

Die Wirksamkeit dieser Futtermittel in Richtung wachstumsfördernder Eigenschaften wurden in einem Mastleistungsversuch mit Schweinen bestätigt.

Die Ergebnisse des Versuches zeigten, daß das erfindungsgemäße Futtermittel bei Mastschweinen im Vergleich zu Tieren ohne Sanguinarextraktzugabe zu einer um 7,5% erhöhten Tageszunahme führte. Dies ist weitaus mehr, als übliche Leistungsförderer an Wachstumszunahme erreichen können (max. 4% Steigerung der Wachstumsintensität). So wurde in diesem Versuch an eine Kontrollgruppe ein probiotischer Leistungsförderer verfüttert, der jedoch zu einer wesentlich schlechteren Zunahmesteigerung als in der Gruppe mit dem erfindungsgemäßen Futter führte (+2,8%).

**Tabelle 2**

| Durchschnittliche Tagesgewichtszunahmen der verschiedenen Versuchsgruppen über einen Beobachtungszeitraum von 70 Tagen bei zugeteilter Futtermenge (keine ad libidum Fütterung). | |
|---|---|
| Gruppe I (Kontrolle) | 507 g |
| Gruppe II (Probioticum) (+2,8%) | 521 g |
| Gruppe III (Sanguinariaextrakt (+7,5%) | 545 g |

Die Sanguinaria Canadensis (Kanadische Blutwurzel) ist eine mono-typische Gattung der Familie der Papaveraceae. Sie ist kräuterartig und stammt aus dem Osten der USA.

Die wirksamen Stoffe der Sanguinaria Canadensis umfassen verschiedene, obengenannte Alkaloide, insbesondere des Sanguinarin als Hauptbestandteil. Die Rhizomen der Pflanze enthalten etwa 3 bis 7 % Alkaloide, abhängig von den Wachstumsbedingungen und der Erntezeit.

Obwohl diese Alkaloide schon lange bekannt sind und auch umfangreiche Toxizitätsversuche an Tieren unternommen worden waren, ist eine positive Wirkung auf das Wachstum von Tieren niemals bemerkt worden. Es handelt sich hier um eine äußerst überraschende, vorteilhafte Eigenschaft dieser Alkaloide.

### Herstellungsbeispiel 1 (gemäß Journal of Toxicology and Environmental Health)

Aus der Sanguinaria Canadensis wird ein Alkaloidextrakt A erhalten, indem aus den pulverisierten Rhizomen eine Säure-Basen Extraktion in Methanol hergestellt und daraus mit Zinkchlorid gefällt wird.

Ein ähnlicher Extrakt B wird auf gleiche Weise hergestellt, wobei aber dem Lösungsmittel eine kleine Menge deionisiertes Wasser zugegeben wird.

Das Sanguinarin kann aus den Extrakten als Reinsubstanz erhalten werden, indem unter Verwendung von NaCl und HCl recrystallisiert, mit NH₄OH versetzt und dann zweimal mit HCl gefällt wird. Die Analysewerte sind in Tabelle 1 enthalten.

### Herstellungsbeispiel 2

Der im beschriebenen Mastleistungsversuch verwendete Extrakt wurde wie nachfolgend beschrieben hergestellt:

Die getrockneten und pulverisierten Rhizome der Sanguinaria Canadensis wurden einer hydroalkoholischen Extraktion unterzogen. Das Lösungsmittel wurde mittels Vakuumdestillation entfernt. Dabei wurde ein konzentrierter, harzähnlicher, zäh-viskoser Extrakt von rötlich brauner Farbe und einem süßlichen, tabakähnlichen Geruch erhalten.

Dieser Extrakt wurde für 24 Stunden gefriergetrocknet und anschließend mit Maisstärke als Binde- und Trägermedium im Verhältnis von etwa 1:4 vermahlen.

Bei dem Verfahren zur Leistungsförderung von Nutztieren liegen die Alkaloidextraktmengen bevorzugt zwischen 0,07 und 35 mg und besonders bevorzugt zwischen 0,35 und 10,5 mg/kg KM/Tag.

## Patentansprüche

1. Tierfutter als Leistungsförderer für Nutztiere, dadurch gekennzeichnet, daß es neben üblichen Futterinhaltsstoffen eine wirksame Menge Pflanzenmaterial der Sanguinaria Canadensis oder eines Extraktes daraus, oder eine wirksame Menge Benzophenanthiridin-Alkaloid, insbesondere des Sanguinarin-Alkaloids, oder dessen Derivate, enthält.

2. Tierfutter nach Anspruch 1, dadurch gekennzeichnet, daß die Alkaloide oder Alkaloidderivate aus folgender Gruppe ausgewählt sind: Sanguinarin, Chelerythrin, Chelirubin, Sanguirubin, Chelilutin, Sanguilutin und physiologisch akzeptable Salze dieser Verbindungen.

3. Tierfutter nach Anspruch 2, dadurch gekennzeichnet, daß die Alkaloide in folgenden Mengenverhältnissen zueinander stehen.
| | |
|---|---|
| Sanguinarin: | 35 bis 55 Gew.-% |
| Chelerythrin: | 20 bis 30 Gew.-% |
| Chelirubin: | 3 bis 5 Gew.-% |
| Sanguirubin: | 0 bis 2 Gew.-% |
| Chelilutin: | 3 bis 40 Gew.-% |
| Sanguilutin: | 0 bis 15 Gew.-% |

4. Tierfutter nach einem der vorhergehenden Ansprüchen 1 bis 3, dadurch gekennzeichnet, daß das Sanguinarin-Alkaloid in Form des Sanguinarinchlorids vorliegt.

5. Tierfutter nach einem der Ansprüche 1 bis 4,dadurch gekennzeichnet, daß der Alkaloidextrakt in einer Menge von 1 bis 500 mg/kg, bevorzugt 5 bis 150 mg/kg bezogen auf Alkaloidextraktmenge pro kg Gesamtfuttermenge, enthalten ist.

6. Verfahren zur Leistungsförderung bei Nutztieren, dadurch gekennzeichnet, daß den Nutztieren ein Tierfutter nach einem oder mehreren der Ansprüche 1 bis 5 verfüttert wird, wobei die Alkaloidextraktmenge zwischen 0,07 und 35 mg, bevorzugt zwischen 0,35 und 10,5 mg pro kg KM (Lebendgewicht) pro Tag liegt.

## Claims

1. Animal feed as a yield promoter for stock animals, characterized in that it comprises, in addition to customary feed contents, an active amount of plant material of Sanguinaria canadensis or of an extract therefrom, or an active amount of benzophenanthiridine alkaloid, in particular sanguinarine alkaloid, or derivatives thereof.

2. Animal feed according to Claim 1, characterized in that the alkaloids or alkaloid derivatives are chosen from the following group: sanguinarine, chelerythrine, chelirubin, sanguirubin, chelilutin, sanguilutin and physiologically acceptable salts of these compounds.

3. Animal feed according to Claim 2, characterized in that the alkaloids are in the following ratios of amounts with respect to one another:
| | |
|---|---|
| sanguinarine: | 35 to 55 % by weight |
| chelerythrine: | 20 to 30 % by weight |
| chelirubin: | 3 to 5 % by weight |
| sanguirubin: | 0 to 2 % by weight |
| chelilutin: | 3 to 40 % by weight |
| sanguilutin: | 0 to 15 % by weight |

4. Animal feed according to one of the preceding Claims 1 to 3, characterized in that the sanguinarine alkaloid is present in the form of sanguinarine chloride.

5. Animal feed according to one of Claims 1 to 4, characterized in that it comprises the alkaloid extract in an amount of 1 to 500 mg/kg, preferably 5 to 150 mg/kg, based on the amount of alkaloid extract per kg of total amount of feed.

6. Method for promoting yield in stock animals, characterized in that the stock animals are fed with an animal feed according to one or more of Claims 1 to 5, the amount of alkaloid extract being between 0.07 and 35 mg, preferably between 0.35 and 10.5 mg per kg of body weight (live weight) per day.

## Revendications

1. Nourriture pour animaux d'élevage améliorant leur performance, caractérisée en ce qu'elle contient, en plus des matières nutritives habituelles, une quantité efficace d'un matériau végétal de Sanguinaria Canadensis ou d'un extrait de celle-ci, ou une quantité efficace d'un alcaloïde de type benzophénanthiridine, en particulier l'alcaloïde sanguinarine, ou les dérivés de celui-ci.

2. Nourriture pour animaux d'élevage conforme à la revendication 1, caractérisée en ce que les alcaloïdes ou dérivés d'alcaloïdes sont choisis dans le groupe formé par la sanguinarine, la chélérythrine, la chélirubine, la sanguirubine, la chélilutine, la sanguilutine ou les sels physiologiquement acceptables de ces composés.

3. Nourriture pour animaux d'élevage conforme à la revendication 2, caractérisée en ce que les alcaloïdes sont présents en les quantités suivantes :
| | |
|---|---|
| sanguinarine : | 35 à 55 % en poids |
| chélérythrine : | 20 à 30 % en poids |
| chélirubine : | 3 à 5 % en poids |
| sanguirubine : | 0 à 2 % en poids |
| chélilutine : | 3 à 40 % en poids |
| sanguilutine : | 0 à 15 % en poids |

4. Nourriture pour animaux d'élevage conforme à une des revendications précédentes 1 à 3, caractérisée en ce que l'alcaloïde sanguinarine est présent sous forme de chlorure de sanguinarine.

5. Nourriture pour animaux d'élevage conforme à une des revendications 1 à 4, caractérisée en ce que l'extrait d'alcaloïde est présent à raison de 1 à 500 mg/kg, de préférence de 5 à 150 mg/kg par rapport à la quantité d'extrait d'alcaloïde par kg de quantité de nourriture totale.

6. Procédé pour améliorer la performance d'animaux d'élevage, caractérisé en ce que l'on nourrit les animaux avec une nourriture conforme à une ou plusieurs des revendications 1 à 5, la quantité d'extrait d'alcaloïde étant comprise entre 0,07 et 35 mg, de préférence entre 0,35 et 10,5 mg par kg de poids corporel (poids vivant) par jour.
